# EUROPÄISCHE PATENTSCHRIFT

(11) **EP 1 064 982 B1**
(45) Veröffentlichungstag und Bekanntmachung des Hinweises auf die Patenterteilung: **22.12.2004**
(21) Anmeldenummer: 00810490.3
(22) Anmeldetag: 06.06.2000
(51) Int. Cl.: B01D 53/64, F23G 5/00, A62D 3/00

(54) **Verfahren zum Entfernen von Metallen aus Reststoffen**
Method for removing metals from residual material
Procédé d'élimination de métaux de matière résiduelle

(30) Priorität: 02.07.1999 EP 99810578
(43) Veröffentlichungstag der Anmeldung: 03.01.2001
(73) Patentinhaber: CTU - Conzepte Technik Umwelt AG, 8400 Winterthur (CH)
(72) Erfinder: Jakob, Aldo, Dr., 8193 Eglisau (CH); Moergeli, Rudolf, 8708 Männedorf (CH)
(74) Vertreter: Sulzer Management AG

(56) Entgegenhaltungen:
- EP-A- 0 249 131
- EP-A- 0 628 341
- EP-A- 0 940 166
- US-A- 5 245 120
- PATENT ABSTRACTS OF JAPAN vol. 018, no. 514 (M-1680), 28. September 1994 (1994-09-28) & JP 06 174383 A (TECHNO TORIITO:KK), 24. Juni 1994 (1994-06-24)

## Beschreibung

Die Erfindung betrifft ein Verfahren zum Entfernen von Metallen aus Reststoffen gemäss Oberbegriff von Anspruch 1 sowie eine Anlage zum Durchführen des Verfahrens.

In der europäischen Patentanmeidung EP 0 940 166 A1 (veröffenticht 08.09.1999) ist im Zusammenhang mit einer Verbrennung von chlorhaltigem Abfall und einer anschliessenden Rauchgasreinigung ein Verfahren zur Behandlung von Reststoffen beschrieben. Bei dieser Abfallverbrennung sowie Rauchgasreinigung entstehen mit Schwermetallen befrachtete Rückstände, nämlich Schlacken, Aschen, Schlämme, Filterrückstände und Flugaschen. Beim genannten Verfahren wird Rauchgas, das bei der Verbrennung entstanden ist, als ein erster Gasstrom einer Rauchgasreinigung zugeführt. Ein Reststoff aus der Verbrennung und/oder aus dem Verfahren wird mit einem zweiten Gasstrom - unter Nutzung des Rauchgases als Quelle von Salzsäure HCI - gemäss folgenden Teilschritten a) bis e) behandelt:
a) dem zweiten Gasstrom wird HCI zugespiesen, das direkt oder indirekt aus der Rauchgasreinigung gewonnen worden ist; b) das Gas wird auf eine für den folgenden Schritt benötigte Behandlungstemperatur erwärmt; c) das Gas wird mit dem Reststoff in Kontakt gebracht, wobei Metallchloride entstehen und schon vorhandene sowie neu entstandene Metallchloride neben weiteren flüchtigen Komponenten in die Gasphase extrahiert werden; d) das Gas wird abgekühlt und ein dabei sich bildendes Kondensat, das Metallchloride enthält, wird aus dem Gas entfernt; e) schliesslich wird das Gas der Rauchgasreinigung zugeführt. Über die Bildung von Metallchloriden lassen sich unter anderen die folgenden chemischen Elemente entfernen: Cadmium Cd, Kupfer Cu, Zink Zn, Blei Pb, Nickel Ni und Chrom Cr.

Es ist Aufgabe der Erfindung, den oben genannten Verfahrenschritt c) so weiter zu bilden, dass die Extraktion der Schwermetalle effizienter wird. Diese Aufgabe wird durch das in Anspruch 1 definierte Verfahren gelöst.

Das Verfahren ist zum Entfernen von Metallen aus festen Reststoffen einer Verbrennung oder metallhaltigen Reststoffen anderer Herkunft vorgesehen. Die Reststoffe liegen als kleine Partikel vor oder sind zu solchen zerkleinert. Sie werden in ein Granulat umgeformt, das vorzugsweise aus porösen Granulatpartikeln besteht. Dieses Granulat wird bei einer thermischen Behandlung einem HCI und H₂O enthaltenden Gasstrom ausgesetzt. Mittels dem Gasstrom lassen sich abdampfende Metalle und/oder Metallverbindungen, insbesondere Metallchloride, aus dem zu behandelnden Granulat wegtransportieren. Für die Temperatur der thermischen Behandlung werden Höchstwerte vorgegeben und zwar so, dass Poren des Granulats nicht aufgrund eines Aufschmelzens des Reststoffs kollabieren. Bei der Granulatbildung werden zusätzlich zu den Partikeln des Reststoffs brennbare Partikel von einer ähnlichen oder feineren Grössenverteilung zugemischt. Diese brennbaren Partikel enthalten vorzugswiese einen hohen Anteil an Kohlenstoff C.

Die abhängigen Ansprüche 2 bis 9 betreffen vorteilhafte Weiterbildungen des erfindungsgemässen Verfahrens.

Nachfolgend wird die Erfindung anhand der Zeichnungen erläutert. Es zeigen:
- Fig. 1: eine schematische Darstellung des erfindungsgemässen Verfahrens,
- Fig. 2: ein Granulatpartikel mit einer sichtbar gemachten Querschnittsfläche,
- Fig. 3: die Kontur der Querschnittsfläche der Fig. 2 nach einer oxidativen Entfernung von Kokspartikeln,
- Fig. 4, 5: Abdampfungsdiagramme für Zn und Ni, zur Veranschaulichung des Einflusses von HCI,
- Fig. 6: Abdampfungsdiagramme für Zn, zur Veranschaulichung des Einflusses von in die Granulatpartikel eingelagertem Koks,
- Fig. 7: eine Tabelle mit Messresultaten und
- Fig. 8: eine schematische Darstellung einer Anlage zur Durchführung des erfindungsgemässen Verfahrens.

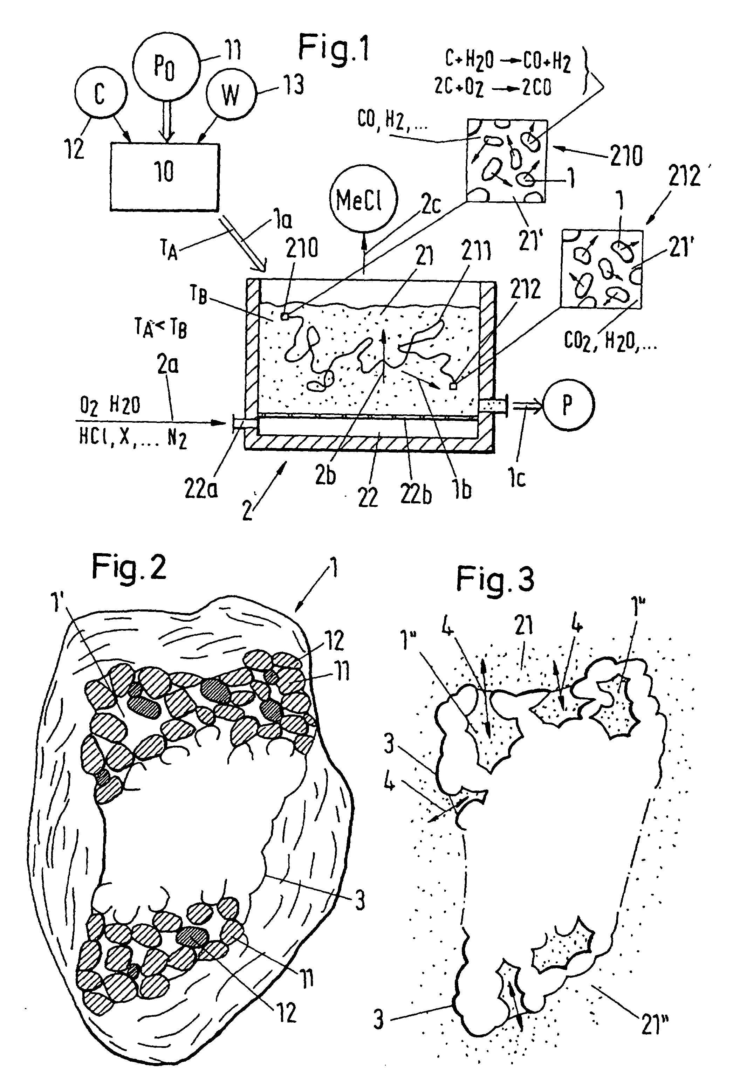

Gemäss Erfindung werden - siehe Fig. 1 - feste Reststoffe, die in einer Pulverform mit Pulverpartikeln 11 vorliegen, als ein Ausgangsprodukt P₀ zusammen mit einem zweiten Pulver aus brennbaren Partikeln 12 sowie einer kleinen Menge 13 an Wasser W in einer Granuliereinrichtung 10 zu einem Granulat umgeformt, wobei Granulatpartikel 1 entstehen. Das Ausgangsprodukt P₀ und/oder das zweite Pulver können auch bereits Wasser enthalten, wobei die Partikel 11 bzw. 12 beispielsweise in einer Schlickerform vorliegen. Die brennbaren Partikel 12 haben eine ähnliche oder feinere Grössenverteilung wie die Pulverpartikel 11 des Ausgangsprodukts P₀. Die brennbaren Partikel 12 enthalten einen hohen Anteil an Kohlenstoff C. Mit Vorteil wird ein pulverförmiger Koks verwendet oder auch andere brennbare Stoffe, wie Kohlen, Klärschlamm oder brennbare Abfälle.

Bei der Granulatbildung werden Partikel gebildet, deren C-Gehalt bis zu 20 Gew-%, vorzugsweise 5 bis 10 Gew-%, beträgt. Das Ausgangsprodukt P₀ und die brennbaren Partikel 12 werden in einem mechanischen Mischer homogenisiert. Dieser Mischer ist mit Vorteil so ausgebildet, dass mit ihm gleichzeitig die Granulatpartikel herstellbar sind. Falls das Granulat einen relativ grossen Wasseranteil hat, wird es noch teilweise getrocknet. Es entsteht das Granulat 1a.

Das Granulat 1a, das eine Temperatur T_{A} hat (in der Regel unter 100°C), wird zu einer thermischen Behandlung in einen Wirbelschichtreaktor 2 eingespeist, dessen Wirbelschicht 21 eine Betriebstemperatur T_{B} von vorzugsweise rund 900°C aufweist, wobei aber die Werte von T_{B} auch in einem breiteren Bereich von 800 - 1000°C liegen können. Die thermische Behandlung kann statt in einem Wirbelschichtreaktor auch in einem Drehrohrreaktor durchgeführt werden.

Für die thermische Behandlung des Granulats 1a wird ein oxidatives Gas 2a verwendet, das O₂, H₂O, HCl, CO₂, N₂ und weitere Stoffe X wie beispielsweise Schwefelverbindungen enthält. Das Gas 2a wird durch einen Stutzen 22a in einen Verteilraum 22 des Reaktors 2 eingespeist. Im Reaktor 2 bildet das Gas 2a nach einer Verteilung über einen Düsenbodens 22b einen Gasstrom 2b, der die Wirbelschicht 21 durchsetzt.

Ein Volumenelement 210 im Eingangsbereich der Wirbelschicht 21 ist in Fig. 1 vergrössert dargestellt: Partikel 1 mit einem die Partikel 1 umgebenden Gasraum 21', wobei die Partikel 1 sich in einem fluidisierten, durch Pfeile angedeuteten Zustand befinden. Ein zweites Volumenelement 212 im Ausgangsbereich ist ebenfalls dargestellt. Eine Trajektorie 211 eines individuellen Granulatpartikels 1, die einen Durchlaufweg des Partikels 1 darstellt, verbindet die beiden Volumenelemente 210 und 212. Ein Granulatstrom 1b, der vom Eingangs- zum Ausgangsbereich führt, wird vom Gasstrom 2b gekreuzt.

Tritt ein Granulatpartikel 1 in die Wirbelschicht 21 ein, so erhöht sich seine Temperatur von TA auf TB. Der im Partikel 1 enthaltene Kohlenstoff C reagiert teilweise mit H₂O endotherm zu den reduzierenden Stoffen CO sowie H₂ und teilweise mit O₂ zu CO und CO₂ sowie H₂O, wobei diese Oxidation exotherm erfolgt und zu einer weiteren Temperaturerhöhung des Partikels 1 führt. Bei einem genügend grossen Anteil an brennbarem Material liegen in den Poren und in der unmittelbaren Umgebung des Partikels 1 am Anfang der thermischen Behandlung reduktive Bedingungen vor. Dabei ist der Reaktor 2 derart gestaltet und ausgelegt, dass sich eine reduktive Bedingungen aufweisende Eingangszone ergibt. Die Intensität der Oxidation und die Zeitdauer der reduktiven Bedingungen lassen sich durch den Gehalt an Kohlenstoff sowie durch den 02-Gehalt des Gases kontrollieren.

Die Temperaturerhöhung aufgrund der exothermen Oxidation darf nur so hoch sein, dass gesteinsähnliche Matrixelemente (Calcium-Aluminium-Silikate) der Reststoffe 11 weitgehend im festen Zustand bleiben, und dass somit die Poren der Partikel 1 sich nicht verschliessen, d.h. nicht kollabieren.

Der Granulatstrom 1 b ist dem oxidativen Gasstrom 2b weiter ausgesetzt, nachdem der Kohlenstoff der Granulatpartikel 1 vollständig abreagiert ist. Dadurch stellen sich nach einer Wegstrecke mit reduktiven Bedingungen auf einer weiteren Strecke des Durchlaufwegs 211 - insbesondere im Volumenelement 212 - oxidative Bedingungen zwischen den Granulatpartikeln 1 sowie in deren Poren ein.

In und auf den Partikeln 1 finden unter den anfänglich reduktiven und nachfolgend oxidativen Bedingungen eine Vielzahl von chemischen Reaktionen statt. Insbesondere werden Metallchloride MeCl aus HCI und den zu extrahierenden Schwermetallen erzeugt. Die Metallchloride werden mit dem Gasstrom 2c aus der Wirbelschicht 21 ausgetragen. Der behandelte Granulatstrom 1c verlässt als gereinigtes Produkt P den Reaktor 2. Neben der Abdampfung der Metalle als Metallchloride können die Metalle auch als Sulfide (insbesondere Pb) oder metallisch (insbesondere Zn) abdampfen.

Durch die im Granulat eingelagerten kohlenstoffhaltigen Partikel ergeben sich drei wesentliche Effekte: 1. Es ist durch die Oxidation dieser Partikel eine Wärmequelle für die Wirbelschicht 21 gegeben. 2. Es wird der Stoffaustausch zwischen den Granulatporen und dem Gasraum 21' verbessert, nämlich durch Vergrösserung der Poren und Bildung von Oxidationsprodukten, die einen konvektiven Gasstrom in die Umgebung 21' verursachen und damit den Transport von Metallchloriden aus den Poren fördern. 3. Reduktion von oxidischen Schwermetallverbindungen und dadurch eine effektive Abdampfung von leichtflüchtigen metallischen Schwermetallen, beispielsweise Zn.

In Fig. 2 ist ein poröses Granulatpartikel 1 dargestellt, das sich aus Partikeln 11 des zu behandelnden Reststoffs P₀ und brennbaren Partikeln 12 zusammensetzt. In einem freigelegten Querschnitt, dessen Umriss mit der zusammenhängenden Konturlinie 3 dargestellt ist, sind Poren 1' sichtbar. Fig. 3 zeigt den entsprechenden Querschnitt, in dem die brennbaren Partikel 12 durch die Oxidation verschwunden sind. Durch Doppelpfeile 4 ist ein Stoffaustausch zwischen den Poreninnenräumen 1" und der Umgebung 21" angedeutet.

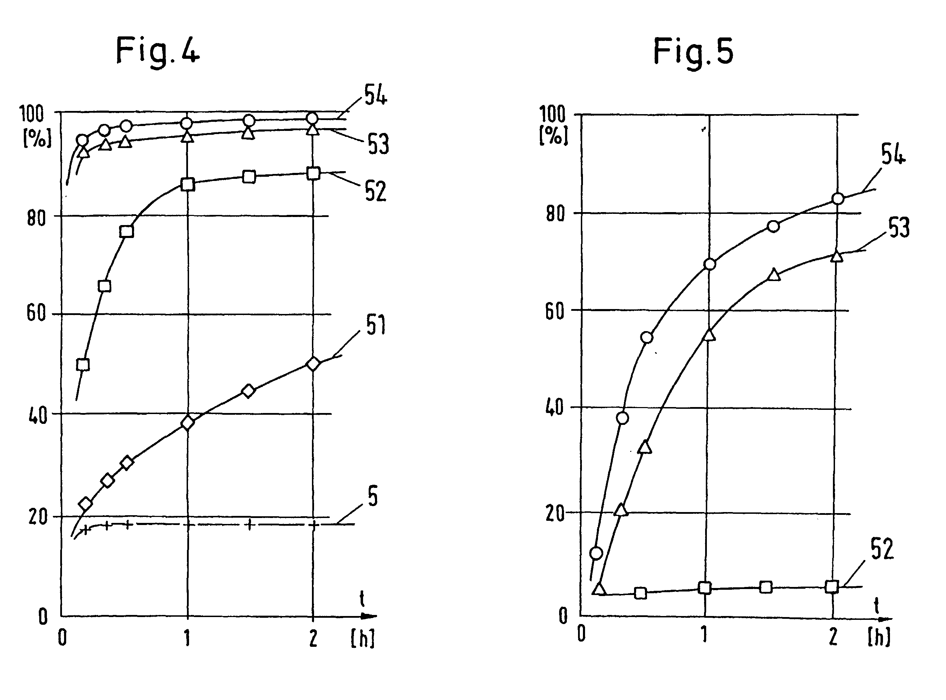

Die Wirkung des erfindungsgemässen Verfahrens auf die Extrahierung von Schwermetallen wurde anhand verschiedener Versuche studiert. Die Figuren 4 bis 7 zeigen Ergebnisse solcher Versuche. Als Ausgangsprodukt P₀ wurde eine Filterasche verwendet, die zu einem grossen Teil aus folgenden Schwermetallen sowie anderen Hauptkomponenten zusammengesetzt ist: Pb (8.2 g/kg), Cd (0.54 g/kg), Cr (0.77 g/kg), Cu (2.1 g/kg), Ni (0.24 g/kg), Zn (37.2 g/kg) sowie Cl (79.8 g/kg), Al (38.4 g/kg). Ca (146 g/kg). K (61.7 g/kg). C (8.8 g/kg), Na (96.6 g/kg), S (47.1 g/kg) und Si (35.3 g/kg). Aus dieser Filterasche und aus pulverförmigem Koks (10 Gew-%) wurde ein Granulat hergestellt, dessen Partikel 1 Durchmesser von rund 600 - 800 µm aufwiesen.

In den Versuchen wurde bestimmt, wie gross die relativen Anteile der abgedampften Schwermetalle - bezogen auf den entsprechenden Anteil im Ausgangsprodukt P₀ - nach der thermischen Behandlung gemäss der Erfindung in Abhängigkeit von der Behandlungszeit t waren. Das Diagramm der Fig. 4 zeigt die Ergebnisse für Zn, das unter Verwendung von oxidativen Gasen (3% O₂) bei 900°C abgedampft worden ist, für deren HCI-Konzentrationen verschiedene Werte eingestellt worden sind. Die Kurve 5 zeigt die Abdampfung, wenn kein HCI im Gas enthalten ist. Die Schar der Kurven 51 bis 54 stellen Messergebnisse für verschiedene HCI-Konzentrationen dar. Für den Scharparameter wurden folgende Werte vorgegeben: 0.5% HCI (Kurve 51), 2% HCI (Kurve 52), 10% HCI (Kurve 53) und 20% HCI (Kurve 54). Fig. 5 zeigt ein entsprechendes Diagramm für Ni. Wie man sieht, muss für Ni die HCI-Konzentration wesentlich grösser sein, um entsprechende Abdampfungen wie beim Zn zu erhalten. Weitere Messungen, die hier nicht dargestellt sind, haben ergeben, dass für Cu die Abdampfung besser als für Zn ist, wobei allerdings bereits ohne HCI eine wesentliche Abdampfung stattfindet. Entsprechendes gilt für Pb und Cd, die noch leichter abdampfbar sind. Im Vergleich zu Ni, das sich bereits schwerer als Zn abdampfen lässt, sind für Cr die Abdampfungsergebnisse noch ungünstiger.

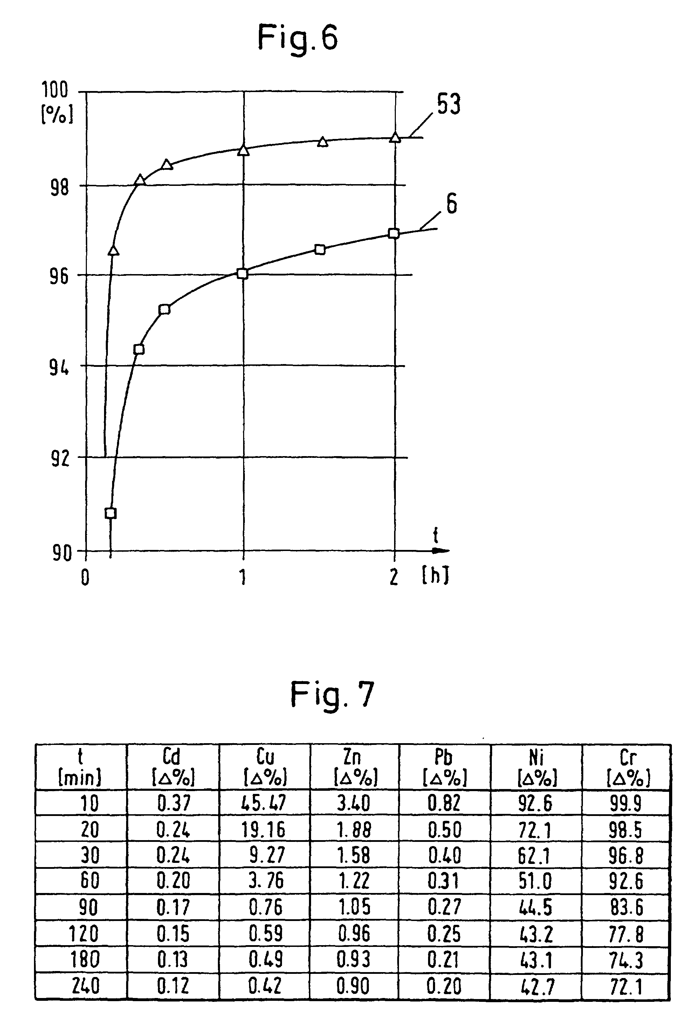

Das Diagramm der Fig. 6 zeigt die Abdampfung von Zn aus einem Granulat, dessen Partikel 1 in einem Fall Koks enthalten - Kurve 53 (vgl. Fig. 4) - und im anderen Fall - Kurve 6 - weder Koks noch ein anderes brennbares Material enthalten.

Ziel der thermischen Behandlung ist, dass möglichst wenig der Schwermetalle im behandelten Produkt P enthalten ist. Die Tabelle in Fig. 7 zeigt die Versuchsergebnisse für relative Restanteile (A%), die mit einem oxidativen Gas (3% O₂ + 10% HCI) bei 900°C und mit einem 10 Gew-% Koks enthaltenden Granulat nach Ablauf verschiedener Behandlungszeiten t (10 - 240 Minuten) gewonnen werden konnten. Bei den in der Tabelle aufgeführten Stoffen handelt es sich wiederum um die bereits genannten Schwermetalle. Vergleiche mit anderen Versuchsergebnissen (Granulat ohne Koks und/oder reduktives statt oxidatives Gas), die hier nicht wiedergegeben werden, zeigen, dass mit den gewählten Parametern im Gesamten gesehen ein vorteilhaftes Verfahren gegeben ist. Für einzelne der Metalle sind bei anderen Versuchsbedingungen zwar auch bessere Resultate erzielbar. Solche Verbesserungen sind allerdings mit Verschlechterungen bei anderen Metallen verbunden, die durch die einseitige Verbesserung nicht aufwiegbar sind.

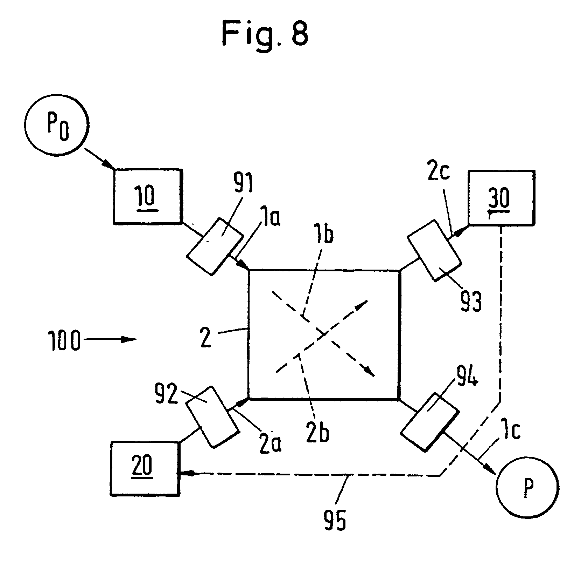

Fig. 8 zeigt eine Anlage 100 zur Durchführung des erfindungsgemässen Verfahrens. Sie umfasst folgende Komponenten (vgl. Fig. 1):
- die Granuliereinrichtung 10 zum Bilden der Granulatpartikel 1 aus festen, partikelförmigen Reststoffen 11, brennbaren Partikeln 12 und einer kleinen Menge an Wasser,
- einen Reaktor 2 für eine thermische Behandlung, in dem bei erhöhter Temperatur T_{B} der Granulatstrom 1b mit dem Gasstrom 2b kontaktierbar ist,
- eine Aufbereitungseinrichtung 20, in der das Gas für die thermische Behandlung aufbereitbar ist,
- eine Abscheidungseinrichtung 30, in der aus dem Granulatstrom 1b abgedampfte Metalle und/oder Metallverbindungen aus dem Verfahren abtrennbar sind, insbesondere durch Kondensation abtrennbar sind, und
- Mittel 92, 93 zum Fördern und/oder Führen des Gasstroms 2a bzw. 2c und Mittel 91, 94 zum Fördern und/oder Führen des Granulatstroms 1 a bzw. 1c.

Das Gas des Gasstroms 2c oder ein Teil von diesem kann nach der Metallabscheidung in der Einrichtung 30 und nach einem nicht dargestellten Aufkonzentrierungsschritt über eine Leitung 95 in die Aufbereitungseinrichtung 20 rückgeführt werden.

Ein Beispiel für die Aufbereitungseinrichtung 20 ist in der eingangs genannten Patentanmeldung beschrieben. Das Gas für die thermische Behandlung wird in diesem Beispiel einer Verbrennung als Rauchgas entnommen. In der Regel muss dem Gas zusätzliches HCI zugespeist werden. Dabei kann das HCI aus dem Rauchgas der gleichen Verbrennung gewonnen sein.

## Patentansprüche

1. Verfahren zum Entfernen von Metallen aus festen Reststoffen (P₀) einer Verbrennung oder aus metallhaltigen Reststoffen anderer Herkunft, wobei
a) die Reststoffe, die als kleine Partikel (11) vorliegen oder zu solchen zerkleinert sind, in ein Granulat (1a) umgeformt werden, das vorzugsweise aus porösen Granulatpartikeln (1) besteht,
b) dieses Granulat bei einer thermischen Behandlung einem HCI und H₂O enthaltenden Gasstrom (2b) ausgesetzt wird, mittels dem sich abdampfende Metalle und/oder Metallverbindungen, insbesondere Metallchloride, aus dem zu behandelnden Granulat wegtransportieren lassen,
c) für die Temperatur der thermischen Behandlung Höchstwerte vorgegeben werden, bei denen Poren (1') des Granulats nicht aufgrund eines Aufschmelzens des Reststoffs kollabieren, und
d) bei der Granulatbildung (10) zusätzlich zu den Partikeln (11) des Reststoffs brennbare Partikel (12) von einer ähnlichen oder feineren Grössenverteilung zugemischt werden, wobei die brennbaren Partikel vorzugsweise einen hohen Anteil an Kohlenstoff C enthalten.

2. Verfahren nach Anspruch 1, **dadurch gekennzeichnet, dass** für die brennbaren Partikel (12) ein Stoff oder Stoffgemisch verwendet wird, dessen C-Gehalt, d. h. Anteil an C, relativ hoch ist, wobei die brennbaren Partikel insbesondere aus Koks oder Kohle gewonnen sind, oder dass ein brennbarer Abfall oder Klärschlamm verwendet wird, dessen C-Gehalt geringer ist, beispielsweise rund 25 Gew-% beträgt.

3. Verfahren nach Anspruch 1 oder 2, **dadurch gekennzeichnet, dass** bei der Granulatbildung (10) Partikel (1) gebildet werden, deren C-Gehalt bis zu 20 Gew-%, vorzugsweise 5 bis 10 Gew-%, beträgt und dass für das Zumischen Mischeinrichtungen zur Erzeugung einer weitgehend homogenen Verteilung verwendet werden.

4. Verfahren nach einem der Ansprüche 1 bis 3, **dadurch gekennzeichnet, dass** die thermische Behandlung in einem Wirbelschichtreaktor (2) oder Drehrohrreaktor durchgeführt wird, wobei für die Temperatur im Reaktor ein Wert im Bereich von 800 - 1000°C, vorzugsweise von rund 900°C, vorgesehen ist.

5. Verfahren nach einem der Ansprüche 1 bis 4, **dadurch gekennzeichnet, dass** für die thermische Behandlung ein oxidatives Gas (2a) verwendet wird, wobei die Granulatpartikel (1) dem Gasstrom (2b) so lange ausgesetzt werden, dass für den individuellen Verfahrensdurchlauf eines Granulatpartikels während eines abschliessenden Teils des Durchlaufs sich oxidative Bedingungen auch in Partikelporen (1") einstellen.

6. Verfahren nach Anspruch 5, **dadurch gekennzeichnet, dass** die Intensität der Oxidation und die Zeitdauer für reduktive Bedingungen durch den C-Gehalt der Granulatpartikel (1) sowie durch den O₂-Gehalt des Gases (2a) kontrolliert werden.

7. Verfahren nach einem der Ansprüche 4 bis 6, **dadurch gekennzeichnet, dass** der Reaktor (2) derart gestaltet und ausgelegt ist, dass sich eine Eingangszone ausbildet, in der sich das zugeführte Granulat (1a) in einer Umgebung mit reduktiven Bedingungen befindet.

8. Verfahren nach einem der Ansprüche 1 bis 7, **dadurch gekennzeichnet, dass** für die HCI-Konzentration des Gases (2a) ein Wert vorgegeben wird, der im Bereich von 1 bis 20 Vol-% liegt, wobei dieser Wert vorzugsweise 10 Vol-% beträgt.

9. Verfahren nach einem der Ansprüche 1 bis 8, **dadurch gekennzeichnet, dass** das Gas (2a) als Rauchgas einer Verbrennung entnommen wird, in das in der Regel HCI zugespeist wird, wobei dieses HCI aus Rauchgas der gleichen Verbrennung gewonnen sein kann.

## Claims

1. Method for removing metals from solid residues (P₀) of an incineration or from residues of other origin containing metal, wherein
a) the residues, which are present as small particles (11) or are comminuted to form such, are reformed into a granulate (1a) which consists preferably of porous granulate particles (1),
b) this granulate is exposed to a gas flow (2b) containing HCl and H₂O in a thermal treatment by means of which vaporizing metals and/or metal compounds, in particular metal chlorides, can be transported away out of the granulate to be treated,
c) maximum values are predetermined for the temperature of the thermal treatment at which pores (1') of the granulate do not collapse as a result of a melting of the residues,
d) in the granulate formation (10) combustible particles (12) of a similar or finer size distribution are additionally admixed to the particles (11) of the residues, with the combustible particles preferably containing a high proportion of carbon C.

2. Method in accordance with claim 1, **characterized in that** a substance or substance mixture is used for the combustible particles (12) of which the C content, i.e. the proportion of C, is relatively large, with the combustible particles being in particular obtained from coke or coal; or **in that** a combustible waste or sewage sludge is used, the C content of which is lower, and amounts to for example about 25 % by weight.

3. Method in accordance with claim 1 or claim 2, **characterized in that** in the granulate formation (10) particles (1) are formed of which the C content amounts to up to 20 % by weight, preferably 5 to 10 % by weight; and **in that** mixing apparatuses are used for the admixing for the production of a largely homogeneous distribution.

4. Method in accordance with any one of the claims 1 to 3, **characterized in that** the thermal treatment is carried out in a fluidised bed reactor (2) or rotary tubular reactor, with a value being provided for the temperature in the reactor in the range from 800 - 1000°C, preferably of about 900°C.

5. Method in accordance with any one of the claims 1 to 4, **characterized in that** an oxidizing gas (2a) is used for the thermal treatment, with the granulate particles (1) being exposed to the gas flow (2b) until oxidizing conditions also set in in particle pores (1") for the individual passage through the process of a granulate particle during a concluding part of the passage.

6. Method in accordance with claim 5, **characterized in that** the intensity of the oxidation and the duration for reductive conditions are controlled through the C content of the granulate particles (1) and through the O₂ content of the gas (2a).

7. Method in accordance with any one of the claims 4 to 6, **characterized in that** the reactor (2) is designed and executed in such a manner that an entry zone is formed in which the supplied granulate (1a) is located in an environment with reducing conditions.

8. Method in accordance with any one of the claims 1 to 7, **characterized in that** a value is predetermined for the HCl concentration of the gas (2a) which lies in the range from 1 to 20 % by volume, with this value preferably amounting to 10 % by volume.

9. Method in accordance with any one of the claims 1 to 8, **characterized in that** the gas (2a) is extracted from an incineration process as a smoke gas, into which as a rule HCl is fed, with it being possible for this HCl to be obtained from smoke gas of the same incineration.

## Revendications

1. Procédé d'élimination des métaux depuis des substances restantes solides (P₀) d'une combustion ou de substances restantes contenant des métaux d'autres origines, où
a) les substances restantes, qui se présentent sous la forme de petites particules (11) ou sont broyées en celles-ci, sont formées en un granulé (1a), qui consiste de préférence, en des particules poreuses de granulé (1),
b) ce granulé est exposé lors d'un traitement thermique, à un courant gazeux contenant HCl et H₂O (2b), à l'aide duquel les métaux et/ou composés métalliques qui s'évaporent, en particulier des chlorures métalliques, peuvent être emmenés hors du granulé à traiter,
c) pour la température du traitement thermique, on donne les valeurs les plus élevées pour lesquelles les pores (1') du granulé ne collapsent pas par fusion des substances restantes, et
d) lors de la formation du granulé (10), en plus des particules (11) des substances restantes, on mélange des particules combustibles (12) d'une distribution de taille similaire ou plus fine, où les particules combustibles contiennent de préférence, une grande quantité de carbone C.

2. Procédé selon la revendication 1, **caractérisé en ce que** pour les particules combustibles (12), on utilise une substance ou un mélange de substances, dont la teneur en C, à savoir la quantité de C, est relativement élevée, où les particules combustibles sont obtenues en particule de coke ou de charbon, ou **en ce que** l'on utilise un déchet ou des scories combustibles, dont la teneur en C est plus faible, par exemple autour de 25% en poids.

3. Procédé selon la revendication 1 ou 2, **caractérisé en ce que** pour la formation du granulé (10), on forme des particules (1), dont la teneur en C s'élève à jusqu'à 20% en poids, de préférence de 5 à 10% en poids et **en ce que** pour le mélange, on utilise des dispositifs de mélange pour produire un distribution essentiellement homogène.

4. Procédé selon l'une quelconque des revendications 1 à 3, **caractérisé en ce que** le traitement thermique est réalisé dans un réacteur à lit fluidisé (2) ou un réacteur tubulaire rotatif, où on prévoit pour la température dans le réacteur, une valeur située dans l'intervalle allant de 800 à 1000°C, de préférence d'environ 900°C.

5. Procédé selon l'une quelconque des revendications 1 à 4, **caractérisé en ce que** pour le traitement thermique, on utilise un gaz oxydant (2a), où les particules de granulé (1) sont exposées au courant gazeux (2b) tant que pour le passage individuel du procédé par une particule de granulé, des conditions oxydantes s'ajustent également dans les pores des particules (1") pendant une partie déterminée du passage.

6. Procédé selon la revendication 5, **caractérisé en ce que** l'intensité de l'oxydation et la durée des conditions réductrices sont contrôlées par la teneur en C des particules de granulé (1), ainsi que par la teneur en O₂ du gaz (2a).

7. Procédé selon l'une quelconque des revendications 4 à 6, **caractérisé en ce que** le réacteur (2) est équipé et étudié de sorte qu'il se forme un zone d'entrée, dans laquelle le granulé introduit (1a) se trouve dans un environnement avec des conditions réductrices.

8. Procédé selon l'une quelconque des revendications 1 à 7, **caractérisé en ce que** l'on donne pour la concentration en HCl du gaz (2a), une valeur qui se situe dans l'intervalle allant de 1 à 20% en volume, où cette valeur s'élève de préférence à 10% en volume.

9. Procédé selon l'une quelconque des revendications 1 à 8, **caractérisé en ce que** le gaz (2a) est prélevé comme un gaz de fumées d'une combustion, dans lequel on injecte de l'HCl, où cet HCl peut être obtenu des gaz de fumées de la même combustion.
